# EUROPÄISCHE PATENTANMELDUNG

(11) **EP 1 589 647 A2**
(43) Veröffentlichungstag der Anmeldung: **26.10.2005**
(21) Anmeldenummer: 05011676.3
(22) Anmeldetag: 04.01.1999
(51) Int. Cl.: H02M 3/28, H02M 3/335, H02M 1/00

(54) **Strom-Spannungsregler und zugehöriger Regelkreis**

(30) Priorität: 05.01.1998 DE 19800105
(62) Teilanmeldung aus: 99100017.5
(71) Anmelder: Kalfhaus, Reinhard, D-63533 Mainhausen (DE)
(72) Erfinder: Kalfhaus, Reinhard, D-63533 Mainhausen (DE)
(74) Vertreter: Stoffregen, Hans-Herbert

(57) **Zusammenfassung**

Die Erfindung bezieht sich auf einen Strom-Spannungswandler (400) mit einem Eingang (414), an dem eine erste Induktivität (L420.1) angeschlossen ist, die über einen Kondensator (422) und eine Diode (424) mit einer in einem ersten Anschluss (426) einer Primärwicklung (TP7) eines Trenntransformators (TR) verbunden ist, der mit seinem zweiten Anschluss (428) mit einem Ausgang (416) verbunden ist, wobei eine Verbindungsstelle (430) zwischen der ersten Induktivität (L420.1) und dem Kondensator (422) über ein Leistungs-Schaltelement (T7) mit dem Ausgang (416) verbunden ist und wobei eine Verbindungsstelle (440) zwischen dem Kondensator (422) und der Diode (424) über eine Reihenschaltung aus zweiter Induktivität (420.2) und Messelement (444) mit dem Ausgang (416) verbunden ist. Um einen Strom-Spannungswandler mit einfachem Aufbau und multiplen Ausgangsspannungen zur Verfügung zu stellen, ist vorgesehen, dass der Trenntransformator (TR) mehrere auf einem gemeinsamen Kern (446) angeordnete Sekundärwicklungen (TS7.1, TS7.2, TS7.3) zur Bildung multipler Ausgänge aufweist.

## Beschreibung

Die Erfindung bezieht sich auf einen Strom-Spannungswandler mit einem Eingang, an dem eine erste Induktivität angeschlossen ist, die über einen Kondensator und eine Diode mit einer in einem ersten Anschluss einer Primärwicklung eines Trenntransformators verbunden ist, der mit seinem zweiten Anschluss mit einem Ausgang verbunden ist, wobei eine Verbindungsstelle zwischen der ersten Induktivität und dem Kondensator über ein Leistungs-Schaltelement mit dem Ausgang verbunden ist und wobei eine Verbindungsstelle zwischen dem Kondensator und der Diode über eine Reihenschaltung aus zweiter Induktivität und Messelement mit dem Ausgang verbunden ist sowie auf einen zugehörigen Regelkreis zum Betrieb des Stromspannungswandlers, umfassend einen Spannungsregler mit Spannungsvergleicher und Spannungsverstärker sowie einen Stromregler mit Stromvergleicher und Stromverstärker sowie ein zwischen Spannungsregler und Stromregler angeordnetes Korrekturglied.

Bei aus dem Stand der Technik bekannten Spannungswandlern für hohe Eingangswechselspannungen oder Gleichspannung erfolgt eine Aufschaltung eines Spitzenwertes der gleichgerichteten Spannung auf einen unmittelbar an den Ausgängen eines Gleichrichters angeordneten Kondensators mit sehr großer Kapazität. Folglich mussten sehr teure Ladeschaltungen mit Vorladung über zum Beispiel einen Widerstand und anschließende Überbrückung mit Schützkontakten realisiert werden.

Auch sind sogenannte "Doppelbooster"-Topologien bekannt, die einen Zwischenkreis mit einem Elektrolyt-Kodensator aufweisen, so dass dieser oder das vorgeschaltete Netz beim Aufschalten der hohen Eingangsspannung aufgrund des Durchgriffs ohne Kurzschlussstrombegrenzung belastet wird. Daher muss dieser Kondensator auf die Spitzenspannung am Eingang ausgelegt sein, die höher als die geregelte Ausgangsspannung des Boosters ist.

Auch treten bei der Beherrschung hoher Eingangsspannungen und Ströme bezüglich der verwendeten Bauelemente Probleme auf. So müssen die verwendeten Halbleiter wie - Transistoren und Dioden an die maximale Eingangsspannung oder Strom angepasst werden und die verwendeten Transformatoren müssen sowohl leistungs- als auch spannungsmäßig an die zu verarbeitende Eingangsspannung angepasst werden, wobei nicht vertretbare Windungs- und Wicklungsspannungen auftreten.

Bei bekannten Wandlern, die Leistungstransistoren als Schaltelemente benutzen, ist die zulässige Eingangsspannung durch die Spannungsbelastbarkeit des verwendeten Leistungstransistortyps begrenzt. Bei einer Reihen- /Parallelschaltung mehrerer, synchron getakteter Transistoren stellt sich das Problem der Spannungs- /Stromsymmetrierung, wozu zum Beispiel die Anbringung verlustbehafleter RCD-Leitungszweige parallel zur Transistorschalt- strecke bekannt ist.

In der DE 44 14 677 A1 wird ein primärgetakteter Spannungswandler vorgeschlagen, dessen Primärseite aus mehreren, seriell aneinandergeschalteten Teilsystemen aufgebaut ist, die jeweils eine Transistor-Leistungsschalteranordnung beinhalten, denen jeweils eine eigene Transformator-Primärwicklung zugeordnet ist, welche über die Sekundärseite des Wandlers an einen gemeinsamen Lastausgang angekoppelt sind. Die Kopplung bewirkt über die Transformator-Wicklungsspannung eine automatische, dynamische und quasi verlustfreie Spannungssymmetrisierung zwischen den Teilsystemen im Lastbetrieb.

Bei dieser Ausführungsform sind die Transformatorwicklungen sekundärseitig "hart"-parallel geschaltet. Dadurch ergibt sich der Nachteil, dass Unsymmetrien zu nicht strombegrenzten dynamischen Ausgleichströmen führen, die aber erst die Symmetrierung bewirken.

Auch ist diese Schaltungsanordnung mit dem Nachteil behaftet, dass bei Wandlern mit Wechselspannungseingang eine Aufschaltung des Spitzwertes der gleichgerichteten Spannung auf einen direkt am Ausgang eines Gleichrichters angeordneten Kondensator mit sehr großer Kapazität erfolgt und alle diese Durchflusswandlertopologien keine der Eingangsspannungs-Kurvenform angepasste Stromaufnahme (Power Factor Correction PFC) zulassen.

Der vorliegenden Erfindung liegt daher das Problem zu Grunde, einen Strom-Spannungswandler mit einem einfachen Aufbau und multiplen Ausgangsspannungen zur Verfügung zu stellen.

Das Problem wird erfindungsmäßig dadurch gelöst, dass der Trenntransformator ausgangsseitig multiple Ausgänge aufweist mit separaten Sekundärwicklungen, die über einen gemeinsamen Kern von der Primärwicklung bestromt werden. Aufgrund der Stromspeisung des Trenntransformators bestimmen sich die Ausgangsspannungen der multiplen Ausgänge allein aus dem Wicklungsverhältnis der Windungszahlen von Primär- zu Sekundärwicklung. Die einzelnen Ströme teilen sich entsprechend dem Innenwiderstand der Last auf die einzelnen Ausgänge auf. Daher sind die Ausgangsspannungen auch bei sich ändernden Lastströmen konstant.

Auch hierbei wird der Strom-Spannungswandler im nicht stromlückenden Betrieb betrieben. Die Ausgangsgrößen sind wiederum primärseitig messbar und dem zuvor beschriebenen Regelkreis zuzuführen.

Alternativ können eine Zusatzwicklung oder eine Sekundärwicklung und/oder die Primärwicklung selbst als Messwicklung ausgebildet sein, um Signale für den Regelkreis zur Verfügung zu stellen.

Ein Regelkreis für einen Strom-Spannungswandier der zuvor genannten Art umfasst einen Spannungsregler mit Spannungsvergleicher und Spannungsverstärker sowie einen Stromregler mit Stromvergleicher und Stromverstärker sowie ein zwischen Spannungsregler und Stromregler angeordnetes Korrekturglied.

Der Regelkreis weist einen Schaltkreis zur Erfassung der Netzspannung und/oder Netzfrequenz auf, wobei der Schaltkreis mit einer Abtastschaltung verbunden ist, die mit einem Eingang an Ausgangsspannung liegt und mit einem Ausgang mit dem ersten Eingang eines Spannungsvergleichers verbunden ist und wobei der Spannungsregler ausgangsseitig mit einem vorzugsweise multiplizierendem D/A-Wandler verbunden ist, der seinerseits mit einem zweiten Eingang mit einem Ausgang des Schaltkreises verbunden ist und ausgangsseitig mit einem Eingang des Stromvergleichers des Stromreglers verbunden ist.

Durch die Erkennung von Netzspannung und Netzfrequenz kann der Regelkreis auf verschiedene Eingangsspannungen und/oder -frequenzen eingestellt werden. Die entsprechenden Regelparameter werden durch den Schaltkreis zur Verfügung gestellt. Eine PFC-Bewertung kann somit bei beliebiger Eingangswechselspannung (Amplitude, Bereich und Frequenz) durchgeführt werden. Alternativ kann auch die gleichgerichtete Eingangsspannung (nach dem Gleichrichter) abgetastet bzw. erfasst werden.

Um eine genaue Ermittlung der Netzspannung und der Netzfrequenz zu gewährleisten - die Netzspannung kann auch eine DC-Spannung sein - ist der Schaltkreis als integrierte Schaltung, vorzugsweise als Mikrocomputer bzw. Mikrocontroller ausgebildet. In Abhängigkeit der ermittelten Netzparameter wird eine synthetische Funktion mit konstanter Amplitude B (bei DC-Eingang) oder eine pulsierende Sinusfunktion B ₘₐₓ | sin (ω t) | (bei AC-Eingang) in Phase und synchron mit dem Netzeingang zur Verfügung gestellt, der die tatsächliche synchronisierte Netzfrequenz repräsentiert. Die an dem Ausgang des Spannungsverstärkers anliegende fehlerverstärkte Spannungsdifferenz kᵤ x _U_{A} kann sodann mit der am Ausgang des Mikrocontrollers zur Verfügung gestellten digitalen Sinusfunktion multipliziert werden. Dazu ist dem Spannungsverstärker der D/A-Wandler nachgeschaltet, dem der digitale Sinus des Schaltkreises zugeführt wird. Am Ausgang des D/A-Wandlers ist eine sinusmodulierte fehlerverstärkte Spannung abgreifbar, die als Sollwert für den nachgeschalteten Strom-Regelkreis zur Verfügung steht.

Vorteil der neuartigen Regelkreisanordnung ist, dass eine Korrektur aufgrund von Eingangsspannungsänderungen nicht notwendig ist. Insbesondere benötigt das Korrekturglied keine Korrektur als Funktion der Eingangsspannung U_{E} Auch der dem Regelkreis zugeführte Ist-Strom I_{AIst} ist unabhängig von Schwankungen der Eingangsspannung U_{E}.

Es ist vorgesehen, dass in dem Schaltkreis vorprogrammierte Sinusfunktionen abgelegt sind, wobei die digitalen Werte in dem den Spannungsverstärker nachgeschalteten D/A-Wandler multipliziert und verrechnet werden.

Auch ist vorgesehen, dass der in dem Schaltkreis erzeugte synthetische Sinus als Referenz für eine kontinuierliche Unter- bzw. Überspannungserkennung herangezogen wird.

Des Weiteren weist der Regelkreis eine in dem Schaltkreis integrierte Komparatorschaltung auf, mit der der am Ausgang des Schaltkreises anliegende synthetische Sinus zum Netz synchronisiert wird.

Weist die Netzspannung keine Nulldurchgänge auf, d. h. es handelt sich um eine Eingangsgleichspannung, so gibt der Schaltkreis einen konstanten Wert B aus, so dass der Regelkreis als DC-Regelkreis arbeitet und eine PFC-Bewertung in diesem Fall nicht stattfindet.

Durch die obigen Maßnahmen kann der Einsatzbereich des Spannungswandlersystems erheblich erweitert werden, so dass speziell im Bahnbereich zumindest vier UIC-Spannungen (1000 VAC 16 2/3 Hz, 1500 VAC 50 Hz, 1500 VDC, 3000 VDC) oder 48/60/110/220V DC und 110/234 VAC 60/50 Hz Netze als Einspannungsbereichswandler beherrschbar sind. Da der Wandler bzw. Regenerator sehr weite Eingangsspannungsbereiche zulässt, wird die Problematik, ob DC-Eingangsspannung oder AC-Eingangsspannung mit verschiedener Frequenz durch vorgenannten Lösungsweg gelöst, so dass alle vier Spannungsbereiche plus Toleranzen (+/- 30 %) und Langzeittransienten in einem Eingangsspannungsbereich abgearbeitet werden können. Auch DC-Eingangsspannungen mit besonders hohem Wechselspannungsanteil vorzugsweise ohne Spitzenströme sind beherrschbar. Auch besteht die Möglichkeit, dass einige Regelparameter auf die Nennspannung voreinstellbar sind (Ton-Zeit).

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von den Figuren zu entnehmenden bevorzugten Ausführungsbeispielen.

Es zeigen:
- Fig. 1: einen kaskadierten Strom-Spannungswandler mit drei primärseitig in Reihe geschalteten Teilsystemen, wobei die Teilsysteme als SEPIC-Wandler ausgebildet sind,
- Fig. 2: einen Strom-Spannungswandler mit drei primärseitig parallel geschalteten Teilsystemen,
- Fig. 3: eine Regelkreisanordnung für zumindest ein Teilsystem des Spannungswandlersystems gemäß Fig. 1 oder Fig. 2 und
- Fig. 4: einen Strom-Spannungswandler mit sekundärseitig multiplen Ausgängen.

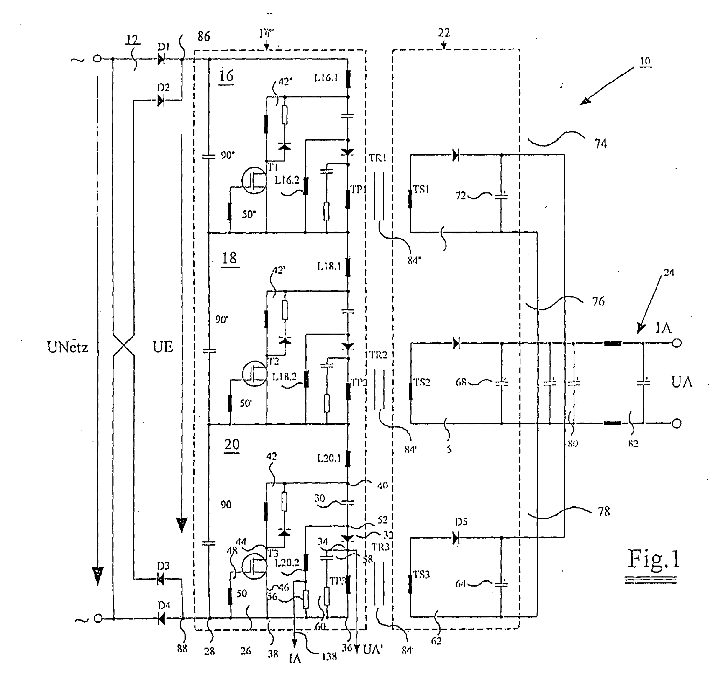

Fig. 1 zeigt einen Strom-Spannungswandler 10, der über einen Dioden D1 bis D4 umfassenden Gleichrichter 12 mit einer Netzspannung U_{Netz} verbunden ist. Die Netzspannung U_{Netz} liegt bei dieser Ausführungsform typisch im Bereich von 1000 bis 1500 VAC und kann eine Frequenz von 16 2/3 Hz bis 400 Hz aufweisen. Auch sind Eingangsspannungen im Bereich von 1500 VDC bis 3000 VDC möglich. Am Ausgang des Gleichrichters 12 liegt in dem hier dargestellten Ausführungsbeispiel eine sinusförmig pulsierende, halbwellenförmige Eingangswechselspannung U_{E} an, die mittels des Spannungswandlers 10 in eine konstante Ausgangsspannung U_{A} umgewandelt wird.

Der Strom-Spannungswandler 10 weist eine Primärseite 14 auf, die mehrere in Reihe geschaltete Teilsysteme 16, 18, 20 aufweist, die jeweils zumindest einen Transistor-Leistungsschalter T1, T2, T3 aufweisen. Die Teilsysteme 16, 18, 20 sind in dem hier dargestellten Ausführungsbeispiel als SEPIC-Wandler bzw. Regeneratoren ausgebildet, deren Ausgang jeweils mit einer Primärwicklung TP1, TP2, TP3 eines Trenntransformators TR1, TR2, TR3 verbunden ist. Die Trenntransformatoren TR1, TR2, TR3 weisen jeweils Sekundärspulen TS1, TS2, TS3 auf, die über eine Sekundärseite 22 des Spannungswandlers 10 an einen gemeinsamen Lastausgang 24 angekoppelt sind.

Im Folgenden wird beispielhaft der Aufbau eines SEPIC-Wandlers anhand des Teilsystems 20 beschrieben. Das Teilsystem 20 umfasst einen SEPIC-Wandler 26, einen primärseitigen Eingang 28 an dem eine Induktivität wie Eingangsdrossel L20.1 angeschlossen ist, die über einen Kondensator 30 und eine Diode 32 mit einem ersten Anschluss 34 der Transformatorprimärwicklung TP3 verbunden ist. Ein weiterer Anschluss 36 ist mit einem primärseitigen Ausgang 38 des SEPIC-Wandlers 26 verbunden. Zwischen der eingangsseitigen Drossel L20.1 und dem Kondensator 30 liegt eine Verbindungsstelle 40, die über ein Vorschaltnetzwerk 42 mit einem ersten Anschluss 44 des Transistor-Leistungsschaltelementes T3 verbunden ist. Ein weiterer Anschluss 46 des Transistor-Leistungsschalters T3 ist mit dem Ausgang 38 verbunden. Ein Steuereingang 48 des Transistor-Leistungsschalters T3 ist über eine Sekundärwicklung eines Übertragers 50 mit dem Ausgang 38 verbunden. Zwischen dem Kondensator 30 und der Diode 32 liegt eine Verbindungsstelle 52, die über eine zweite Drossel L20.2 und einen Widerstand 56 wie Shunt mit dem Ausgang 38 verbunden ist. Parallel zu der primärseitigen Transformatorwicklung TP3 ist ein Entlastungsnetzwert als Reihenschaltung aus Kondensator 58 und Widerstand 60 angeordnet.

Sekundärseitig ist die Sekundärwicklung TS3 des Trenntransformators TR3 mit einer Spitzenwert- Gleichrichtschaltung 62 bestehend aus der Diode D5 verbunden, an dessen Ausgang ein Kondensator 64 liegt. Der Sekundärwicklung TS2 ist ebenfalls eine Gleichrichtschaltung 66 nachgeschaltet, an deren Ausgang ein Kondensator 68 liegt. Gleiches gilt für die Sekundärwicklung TS1, der eine Gleichrichtschaltung 70 nachgeschaltet ist, an dessen Ausgang ein Kondensator 72 liegt. Die Sekundärseite 22 besteht im Wesentlichen aus drei Sekundärsystemen 74, 76, 78, bestehend aus jeweils der sekundären Transformatorwicklung, dem zugehörigen und zugeordneten Gleichrichter und dem Ausgangskondensator. Die Sekundärsysteme 74, 76, 78 sind elektrisch parallel geschaltet und bilden einen Ausgang 80, an dem über ein Filternetzwerk 82 die geregelte Ausgangsspannung U_{A} abgreifbar ist. Die Kondensatoren 64, 68,72 können auch als einzelner gemeinsamer Kondensator mit großer Kapazität ausgelegt werden.

Vorzugsweise sind die Wicklungen der Trenntransformatoren auf einen separaten Transformatorkern 84, 84', 84" angeordnet. Alternativ besteht jedoch die Möglichkeit, die Wicklungen bei entsprechendem Verhältnis der Spannungen und Ströme auf einem gemeinsamen Kern anzuordnen.

Durch die primärseitige Reihenschaltung der Regeneratoren bzw. SEPIC-Wandler mit Potentialtrennung reduziert sich die an einem Transistor-Leistungsschalter T1, T2, T3 abfallende Spannung auf ein Drittel der Eingangsspannung U_{E}. Aus diesem Grund können Transistoren mit handelsüblicher Spannungsfestigkeit eingesetzt werden. Durch zeitsynchrones Ansteuern der primärseitigen Teilsysteme 16, 18, 20 über die Übertrager 50, 50', 50" liegt jede Stufe an einem Drittel der Eingangsspannung U_{E}. Um ein zeitsynchrones Ansteuern zu erreichen, sind Ansteuer-Wicklungen der Übertrager 50, 50', 50" der auf einem gemeinsamen magnetischen Kern angeordnet. Alternativ besteht jedoch die Möglichkeit, die Ansteuerwicklungen als getrennte Transformatoren auszubilden, speziell bei sehr hohen Eingangsspannungen.

Beim Ansteuern der Transistor-Leistungsschalter T1, T2, T3 fließt ein Strom von dem positiven Pol 86 des Gleichrichters 12 über eine Eingangsdrossel L16.1 des Teilsystems 16, ein Vorschaltnetzwerk 42" und den Transistor-Leistungsschalter T1, sowie über die Eingangsdrossel L18.1, das Snubbernetzteil 42' und den Transistor-Leistungsschalter T2 sowie über die Eingangsdrossel L20.1, das Vorschaltnetzteil 42 und den Transistor-Leistungsschalter T3 zu dem negativen Pol 88 des Gleichrichters. Da der Strom durch die Eingangsdrossel L20.1, L18.1 und L16.1 identisch ist, wird - gleiche Induktivitäten der Drosselspulen und synchrone Ansteuerung der Transistor-Schaltelemente T1, T2, T3 vorausgesetzt - an jeder Drosselspule L16.1, L18.1, L20.1 die gleiche Spannung abfallen, wodurch auch an den Transistor-Leistungsschaltern T1, T2, T3 ein gleicher Spannungsabfall eingestellt wird.

Parallel zu den Eingängen der jeweiligen Teilsysteme 16, 18, 20 liegen bei DC-Eingang die Kondensatoren 90, 90', 90", an denen jeweils nur 1/3 der Eingangsspannung U_{E} abfällt. Im vorliegenden Fall wird der ansonsten übliche sehr große Speicherkondensator dem primären direkten Zugriff der Eingangsspannung entzogen und auf die Niedervolt- bzw. Sekundärseite transformiert und dort kurzschlussstromgeregelt aufgeladen.

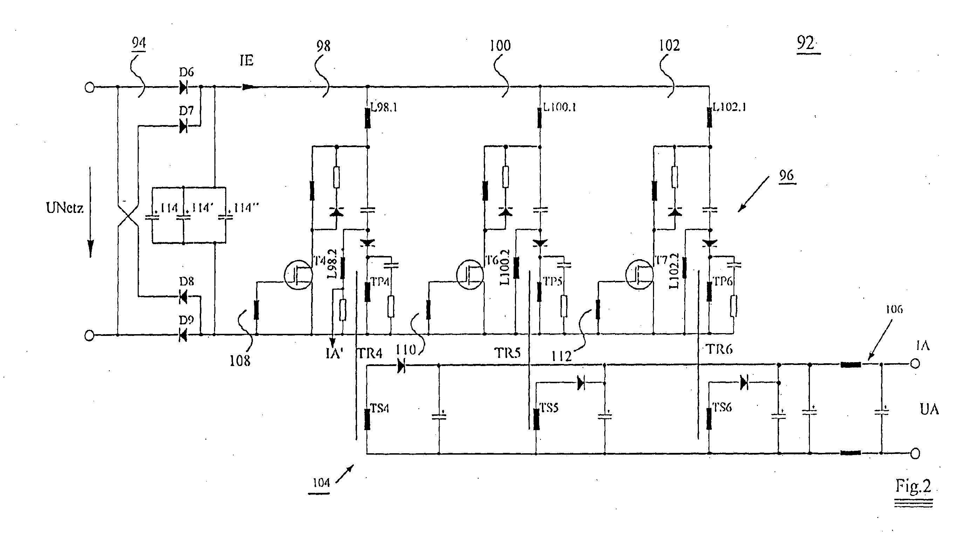

In Fig. 2 ist ein Strom-Spannungswandler 92 dargestellt, der über einen Gleichrichter 94 mit den Dioden D6 - D9 mit Netzspannung U_{Netz} verbunden ist. Bei diesem Ausführungsbeispiel liegt die Netzspannung U_{Netz} typischerweise im Bereich von 110 - 234 VAC oder 28 - 48 VAC und kann eine Frequenz von 16 2/3 Hz - 400 Hz aufweisen. Auch sind Netzspannungen im Bereich von 4 - 72 oder 14,4 - 154 VDC möglich. Der Strom-Spannungswandler 92 ist insbesondere für hohe Eingangsströme I_{E} bzw. Ausgangsströme I_{A} konzipiert.

Der Strom-Spannungswandler 92 weist eine Primärseite 96 auf, die mehrere parallel geschaltete Teilsysteme 98, 100, 102 aufweist, die jeweils zumindest einen Transistor-Leistungsschalter T4, T6, T7 aufweisen. Die Teilsysteme 98, 100, 102 sind in dem hier dargestellten Ausführungsbeispiel als SEPIC-Wandler bzw. -Regeneratoren ausgebildet, deren Ausgang jeweils mit einer Primärwicklung TP4, TP5, TP6 eines Trenntransformators TR4, TR5, TR6 verbunden ist. Die Trenntransformatoren TR4, TR5, TR6 weisen jeweils Sekundärspulen TS4, TS5, TS6 auf, die über eine Sekundärseite 104 des Spannungs-Stromwandlers 92 an einen gemeinsamen Lastausgang 106 angekoppelt sind.

Der Aufbau der Teilsysteme 98, 100, 102 entspricht im Wesentlichen den Teilsystemen 16, 18, 20, die mit Bezug zu Fig. 1 ausführlich beschrieben wurden. Durch die primärseitige Parallelschaltung der Regeneratoren bzw. SEPIC-Wandler 98, 100, 102 mit der Potentialtrennung reduziert sich der durch einen Transistor-Leistungsschalter T4, T5, T6 fließende Strom auf ein Drittel des Eingangsstroms I_{E}. Aus diesem Grund können Transistoren mit handelsüblicher Stromfestigkeit eingesetzt werden. Durch zeitsynchrones Ansteuern der primärseitigen Teilsysteme 98, 100, 102 mittels Ansteuer-Überträger 108, 110, 112 fließt durch jede Stufe ein Drittel des Eingangsstroms I_{E}. Um ein zeitsynchrones Ansteuern zu erreichen, sind die Ansteuer-Überträger 108, 110, 112 bei der hier beschriebenen Parallelschaltung auf einem gemeinsamen Kern. Die Ansteuer-Überträger 108, 110, 112 können auch als elektronische Halbleiter-Leistungstreiber (nicht abgebildet) ausgebildet sein. Die Teilsysteme 98, 100, 102 weisen eingangsseitige Induktivitäten L 98.1, L 100.1, L 102.1 auf, die über die Transistor-Leistungsschalter zumindest zeitweise parallel an der Eingangsspannung U_{E} liegen und somit eine Stromsymmetrierung des Gesamtsystems bewirken.

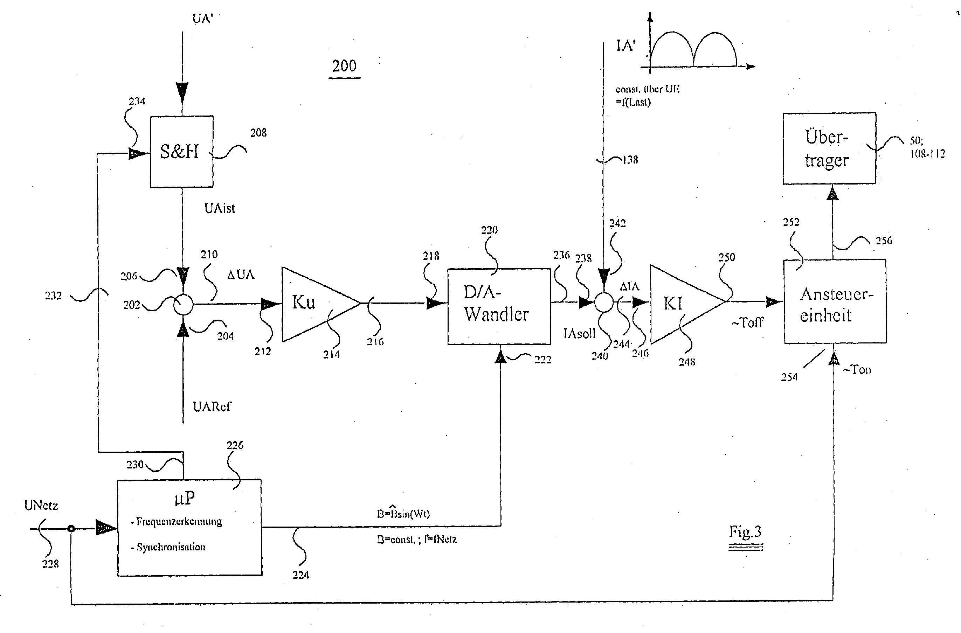

Die Regelung des Strom-Spannungswandlers soll anhand der Regelschaltung nach Fig. 3 erläutert werden.

In Fig. 3 ist eine Regelkreisanordnung zur Ansteuerung zumindest eines Teilsystems 16, 18, 20 oder 98, 100, 102 des Strom-Spannungswandlers 10 oder 92 gemäß Fig. 1 oder 2 dargestellt. Der Regelkreis 200 weist eingangsseitig einen Spannungvergleicher 202 auf, der mit einem ersten Eingang 204 mit einer Referenzspannung U_{ARef} und mit einem zweiten Eingang 206 über eine Abtastschaltung 208 wie Sample and Hold-Schaltung bzw. kontinuierliches Messen mit der Ausgangsspannung U_{A} zum Abgriff einer Ist-Spannung U_{Alst} verbunden ist. Die Ausgangsspannung U_{A} wird über ein nicht dargestelltes Messelement am Ausgang 24 des Strom-Spannungswandlers gemessen bzw. über die Bürdenspannung U_{A}' an der primären Transformatorwicklung TP1 - TP6 während der T_{OFF}-Phase.

Ein Ausgang 210 des Vergleichers 202 ist mit einem Eingang 212 eines Verstärkers 214 verbunden, um eine aus Ist-Spannung U_{Alst} und Referenz-Spannung U_{ARef} gebildete Differenzspannung _U_{A} zu verstärken. An einem Ausgang 216 des Verstärkers 214 liegt eine fehlerverstärkte Spannung K_{U} x _ U_{A} an, die einem Eingang 218 eines multiplizierenden D/A-Wandlers 220 zugeführt wird. Ein weiterer Eingang 222 des D/A-Wandlers 220 ist mit einem Ausgang 224 eines Schaltkreises, vorzugsweise Mikrocontrollers 226 verbunden. Der Mikrocontroller 226 ist seinerseits über eine Zuleitung 228 mit einer Netzleitung bzw. mit Netzspannung U_{Netz} verbunden. Des Weiteren ist der Mikrocontroller 226 über einen Ausgang 230 und eine Triggerleitung 232 mit einem Eingang 234 der Abtast-Schaltung 208 verbunden.

Ein Ausgang 236 des D/A-Wandlers 220, an dem ein Soll-Strom I_{Asoll} anliegt, ist mit einem Eingang 238 eines Vergleichers 240 verbunden. Ein weiterer Eingang 242 des Vergleichers 240 ist über eine Zuleitung 138 mit dem Shunt 56 im Zweig der Drosselspule 220.1 zum Abgriff einer dem Ausgangsstrom I_{A} proportionalen Größe I_{A}' verbunden. Ein Ausgang 244 des Vergleichers ist mit einem Eingang 246 eines Stromverstärkers 248 verbunden. An einem Ausgang 250 des Verstärkers liegt eine verstärkte Stromdifferenz K₁ x _I_{A} an, die einer Ansteuereinheit 252 zugeführt wird und eine Regelgröße bildet. Die Ansteuereinheit weist ferner einen Eingang 254 für die Netz- bzw. Eingangsspannung zur T_{ON}-Steuerung sowie einen Ausgang 256 zur Ansteuerung der Transistor-Leistungsschalter TI bzw. T6 über Ansteuerübertrager 50, 50', 50" bzw. 108 - 112. Mit der Größe K, x _I_{A} wird die T_{OFF} -Zeit der Transistor-Leistungsschalter T1 - T6 geregelt bzw. gesteuert. Auch ohne U/I-Regler wird mittels T_{ON}-Steuerung und Vorgabe der T_{OFF}-Spannung als DC-Größe eine quasikonstante Ausgangsspannung mit Sinusstromaufnahme bei Wechselspannungs-Speisung und wechselndem Eingangsbereich bzw. Ausgangslast erzielt.

Über die Eingangsleitung 228 ermittelt der Mikrocontroller 226 einerseits die Eingangsnetzspannung U_{Netz} sowie andererseits die Netzfrequenz f_{Netz}. Bei Gleichspannung als Netzspannung wird die Frequenz f_{Netz} = 0 erkannt. Es können beliebige Frequenzen, vorzugsweise f = 16 2/3, 50 bzw. 60 Hz erkannt werden. Aufgrund der ermittelten Netzfrequenz wird im Mikrocontroller 120 eine synthetische, ideale pulsierende (gleichgerichtete) Sinusfunktion abgelegt und generiert, die mit der Netzfrequenz synchronisiert ist und eine konstante Amplitude Bₘₐₓ aufweist.

Nach Erkennung und Abspeicherung der Zeitbasis startet die Bearbeitung mit einem Trigger-Nulldurchgang und synchronisiert darüber bei weiteren Nulldurchgängen. Synchronisationsimpulse, die zwischen den mathematischen Nulldurchgängen liegen, werden wegen eventueller Störgrößen ausgeblendet.

Der generierte Sinusverlauf wird über den Ausgang 224 an den Eingang 226 des D/A-Wandlers 220 ausgegeben. Gleichzeitig wird mit einem Synchronisationsimpuls, der zu jedem Halbwellen-Nulldurchgang ansteht, die Abtast-Schaltung 208 getriggert. In dem D/A-Wandler 220 wird nun die fehlerverstärkte Differenzspannung K_{U} x _U_{A} mit dem synthetischen Sinusverlauf Bmax x| sin (ωt)|, die mit der Netzspannung in Phase liegt, multipliziert. Am Ausgang liegt somit eine Sinus-bewertete spannungsfehlerverstärkte Größe an, die als Soll-Strom I_{ASoll} zur Ansteuerung der Transistor-Leistungsschalter T1 - T6 zur Verfügung steht. Im Gegensatz zu bekannten Regelkreisen bedarf es keines zusätzlichen Korrekturgliedes, da durch die Messung des Ausgangsstroms im primärseitigen Drosselzweig eine Größe zur Verfügung steht, die von Langzeit-Schwankungen der Eingangsspannung U_{E} unabhängig ist aber der Kurvenform der Nennfrequenz folgt (PFC).

Aufgrund der in dem Mikrocontroller generierten synthetischen Sinusfunktion kann diese auch als Referenz für eine Unter- bzw. Überspannungserkennung herangezogen werden. Die in dem Mikrocontroller generierte Sinusfunktion kann mittels einer Komparatorschaltung zum Netz synchronisiert werden. Erkennt der Mikrocontroller 226, dass die Eingangsspannung eine Gleichspannung ist, so wird an dem Ausgang 224 eine Konstantspannung B ausgegeben, so dass eine PFC-Bewertung entfällt.

Bezüglich des Ausgangsspannungs-Istwertes U_{Alst} ist anzumerken, dass dieser mit dem Trigger des Sinus-Null-Durchgangs abgefragt, in die Sample and Hold-Schaltung 208 abgespeichert und mit dem Referenzwert U_{ARef} verglichen wird.

Das beschriebene System aus Strom-Spannungswandler 10, 92 und erfindungsgemäßer Regelschaltung 200 kommt insbesondere im Bahnbereich an vier UIC-Spannungen, wie zum Beispiel 1000 VAC 16 2/2 Hz, 1500 VAC 50 Hz, 1500 VDC sowie 3000 VDC zur Anwendung. Da der Spannungswandler bzw. Regenerator einen weiten Eingangsspannungsbereich zulässt, wird die Problematik, ob Eingangswechselspannung oder Eingangsgleichspannung bzw. welche Frequenz die Eingangswechselspannung aufweist, durch die zuvor angegebenen Merkmale gelöst. Jedoch können alle vier Bereiche sowie Toleranzen (+- 30 %) und Langzeittransienten in einem Eingangsspannungsbereich abgearbeitet werden.

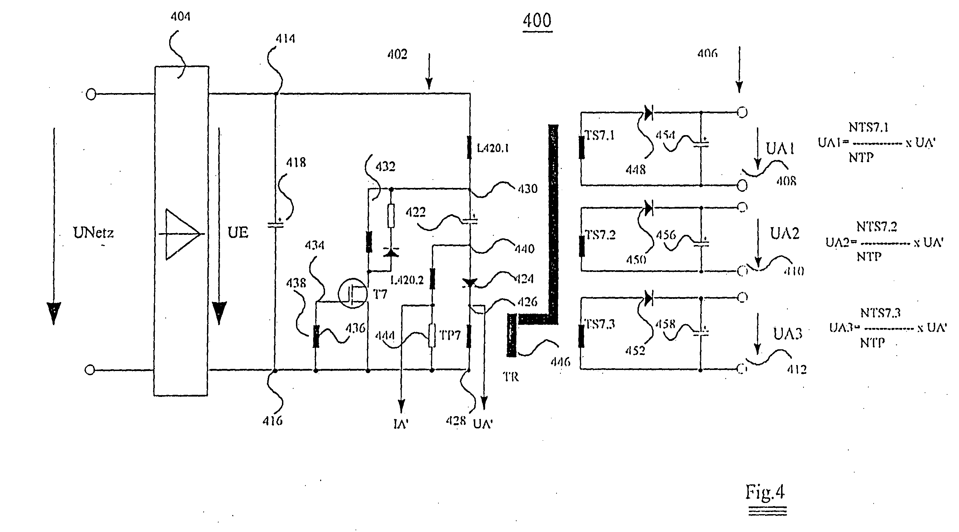

Der Fig. 4 ist ein Strom-Spannungswandler 400 mit eigenständigem Erfindungscharakter zu entnehmen. Der Strom-Spannungswandler 400 weist eine über einen Gleichrichter 404 an Netzspannung U_{Netz} liegende Primärseite 402 und eine Sekundärseite 406 auf, die mehrere, d. h. multiple, vorzugsweise drei Ausgänge 408, 410, 412 mit den Ausgangsspannungen U_{A1}, U_{A2}, U_{A3}.

Parallel zu Ausgangsklemmen 414, 416 des Gleichrichters 404 liegt ein Kondensator 418 an dem eine Eingangsspannung U_{E} für den Strom-Spannungswandler 400 anliegt. Mit dem Anschluss 414 ist eine primäre Induktivität wie Drosselspule L420.1 verbunden, die über einen Kondensator 422 und eine Diode 424 mit einem ersten Anschluss 426 einer primärseitigen Wicklung TP7 eines Trenntransformators TR verbunden ist. Mit einem Anschluss 428 ist die primärseitige Wicklung TP7 mit der Eingangsklemme 416 des Gleichrichters 404 verbunden. Zwischen der Drosselspule L420.1 und dem Kondensator 422 liegt eine Verbindungsstelle 430, die über ein Snubber-Netzwerk 432 und einen Transistor-Leistungsschalter T7 mit der Klemme 416 verbunden ist. Ein Steueranschluss 434 des Transistor-Leistungsschalters T7 ist über eine Sekundärwicklung 436 eines Ansteuerübertragers 438 mit der Klemme 416 verbunden.

Eine zwischen dem Kondensator 422 und der Diode 424 liegende Verbindungsstelle 440 ist über eine zweite Induktivität wie Drosselspule L 420.2 und ein dazu in Reihe liegendes Messelement wie Shunt 444 ebenfalls mit der Klemme 416 verbunden. Die sekundärseitigen multiplen Ausgänge 408, 410, 412 weisen jeweils eine Sekundärwicklung TS7.1, TS7.2, TS7.3 auf, die zusammen mit der Primärwicklung TP7 auf einem gemeinsamen Kern 446 angeordnet sind. Die Sekundärwicklungen TS7.1, TS7.2, TS7.3 sind jeweils über eine Gleichrichterdiode 448, 450, 452 mit einem Ausgangskondensator 454, 456, 458 verbunden, an dem die Ausgangsspannung U_{A1}, U_{A2} und U_{A3} anliegen.

Zu Regelung des Strom-Spannungswandlers 400 kann der mit Bezug zu Fig. 3 beschriebene Regelkreis eingesetzt werden. Auch der Strom-Spannungswandler 400 zeichnet sich dadurch aus, dass eine Rückführung von Regelgrößen oder Überwachungsfunktionen von sekundärseitigen Größen nicht erforderlich ist. Dies wird insbesondere dadurch ermöglicht, dass die Ausgangsspannung primärseitig während der T_{Off}-Zeit am Anschluss 426 der Primärwicklung TP7 und der Ausgangsstrom (Average-Größe) auf der Primärseite an dem Messelement 440 messbar ist. Die Eingangsspannung kann während der T_{On}-Zeit sekundärseitig gemessen werden.

## Patentansprüche

1. Strom-Spannungswandler (400) mit einem Eingang (414), an dem eine erste Induktivität (L420.1) angeschlossen ist, die über einen Kondensator (422) und eine Diode (424) mit einer in einem ersten Anschluss (426) einer Primärwicklung (TP7) eines Trenntransformators (TR) verbunden ist, der mit seinem zweiten Anschluss (428) mit einem Ausgang (416) verbunden ist, wobei eine Verbindungsstelle (430) zwischen der ersten Induktivität (L420.1) und dem Kondensator (422) über ein Leistungs-Schaltelement (T7) mit dem Ausgang (416) verbunden ist und wobei eine Verbindungsstelle (440) zwischen dem Kondensator (422) und der Diode (424) über eine Reihenschaltung aus zweiter Induktivität (420.2) und Messelement (444) mit dem Ausgang (416) verbunden ist,
**dadurch gekennzeichnet,**
**dass** der Trenntransformator (TR) mehrere auf einem gemeinsamen Kern (446) angeordnete Sekundärwicklungen (TS7.1, TS7.2, TS7.3) zur Bildung multipler Ausgänge aufweist.

2. Strom-Spannungswandler nach Anspruch 1,
**dadurch gekennzeichnet,**
**dass** der Strom-Spannungswandler (400) im nicht stromlückenden Betrieb arbeitet.

3. Strom-Spannungswandler nach Anspruch 1,
**dadurch gekennzeichnet,**
**dass** eine den Ausgangsspannungen U_{A1}, U_{A2}, U_{A3} proportionale Größe U_{A}' an der primären Trafowicklung (TP7) abgreifbar ist.

4. Strom-Spannungswandler nach Anspruch 1,
**dadurch gekennzeichnet,**
**dass** eine den Ausgangsströmen I_{A1}, I_{A2}, I_{A3} proportionale Größe I_{A}' an dem in Reihe zu der zweiten Induktivität (L420.2) liegenden Messelement (444) wie Shunt messbar ist.

5. Strom-Spannungswandler nach Anspruch 1,
**dadurch gekennzeichnet,**
**dass** die Sekundärwicklungen (TS7.1, TS7.2, TS7.3) zur Einstellung der verschiedenen Ausgangsspannung U_{A1}, U_{A2}, U_{A3} unterschiedliche Windungszahlen aufweisen.

6. Strom-Spannungswandler nach Anspruch 1,
**dadurch gekennzeichnet,**
**dass** die Ausgangsspannungen U_{A1}, U_{A2}, U_{A3} konstant sind.

7. Strom-Spannungswandler nach Anspruch 1,
**dadurch gekennzeichnet,**
**dass** eine Zusatzwicklung oder eine Sekundärwicklung und/oder die Primärwicklung selbst als Messwicklung ausgebildet sind und Regelgrößen für einen Regelkreis zur Verfügung stellt.

8. Regelkreis (200) für einen Strom-Spannungswandler (400) nach einem der Ansprüche 1 bis 7, umfassend einen Spannungsregler mit Spannungsvergleicher und Spannungsverstärker sowie einen Stromregler mit Stromvergleicher und Stromverstärker sowie ein zwischen Spannungsregler und Stromregler angeordnetes Korrekturglied,
**dadurch gekennzeichnet,**
**dass** der Regelkreis einen Schaltkreis (226) zur Erfassung der Netzspannung und/oder Netzfrequenz aufweist, dass der Schaltkreis (226) mit einer Abtastschaltung (208) verbunden ist, die mit einem Eingang an einer der Ausgangsspannung U_{A} proportionalen Größe U_{A}' liegt und mit einem Ausgang mit dem Spannungsvergleicher (202) verbunden ist und dass der Spannungsregler ausgangsseitig mit einem ersten Eingang (218) eines D/A-Wandlers (220) verbunden ist, der seinerseits mit einem zweiten Eingang (222) mit einem Ausgang (224) des Schaltkreises (226) und ausgangsseitig mit einem Eingang (238) des Stromvergleichers (240) des Stromreglers verbunden ist.

9. Regelkreis nach Anspruch 8,
**dadurch gekennzeichnet,**
**dass** der Schaltkreis (226) eine Schaltung zur Erfassung der Netzspannung und/oder Netzfrequenz, eine Schaltung zur Erzeugung einer synthetischen Sinusfunktion, eine Triggerschaltung sowie eine Synchronisationsschaltung aufweist.

10. Regelkreis nach Anspruch 8,
**dadurch gekennzeichnet,**
**dass** am Ausgang (224) des Schaltkreises (226) ein synthetischer Sinus B = Bₘₐₓ |sin (ωt)| mit konstanter Amplitude B zur Verfügung steht, der die tatsächliche Netzfrequenz repräsentiert.

11. Regelkreis nach einem der zuvor genannten Ansprüche,
**dadurch gekennzeichnet,**
**dass** am Ausgang (230) des Schaltkreises (226) ein Triggersignal für die AbtastSchaltung (208) zur Verfügung steht.

12. Regelkreis nach einem der zuvor genannten Ansprüche,
**dadurch gekennzeichnet,**
**dass** in dem Schaltkreis (226) vorprogrammierte Sinusfunktionen abgelegt sind.
